# EUROPÄISCHE PATENTSCHRIFT

(11) **EP 0 802 031 B1**
(45) Veröffentlichungstag und Bekanntmachung des Hinweises auf die Patenterteilung: **28.03.2001**
(21) Anmeldenummer: 97101517.7
(22) Anmeldetag: 31.01.1997
(51) Int. Cl.: B29C 45/14

(54) **Formkörper aus Sprödwerkstoff, eingefasst in einem umspritzten Kunststoff-Halterahmen und Verfahren zum Einfassen des Formkörpers mit dem Halterahmen**
Shaped body of brittle material clasped in an injection moulded plastic supporting frame and method for clasping a shaped body in a supporting frame
Corps formé en matière fragile enserré dans un cadre de support moulé par injection en matière plastique et procédé pour enserrer un corps formé dans un cadre de support

(30) Priorität: 19.04.1996 DE 19615371
(43) Veröffentlichungstag der Anmeldung: 22.10.1997
(73) Patentinhaber: Schott Glas, 55122 Mainz (DE); CARL-ZEISS-STIFTUNG trading as Schott Glas, 55122 Mainz (DE)
(72) Erfinder: Schultheis, Bernd, 55270 Schwabenheim (DE); Heisner, Thomas, 55124 Mainz (DE); Busch, Dietrich, Newton Aycliffe, County Durham DL 5 7PX (GB); Scheidler, Herwig, 55126 Mainz (DE)
(74) Vertreter: Fuchs Mehler Weiss & Fritzsche

(56) Entgegenhaltungen:
- FR-A- 2 393 663
- FR-A- 2 646 800
- PATENT ABSTRACTS OF JAPAN vol. 96, no. 7, 31.Juli 1996 & JP 08 072094 A (ASAHI K.K.), 19.März 1996,
- PATENT ABSTRACTS OF JAPAN vol. 96, no. 4, 30.April 1996 & JP 07 323727 A (HASHIMOTO FORMING IND CO LTD), 12.Dezember 1995,

## Beschreibung

Die Erfindung betrifft einen Formkörper aus Sprödwerkstoff, der in einem umspritzten Halterahmen aus Kunststoff eingefaßt ist. Derartige Formkörper haben eine bestimmte flächenhafte Ausdehnung und können daher auch als flächige Formkörper bezeichnet werden.

Die Erfindung betrifft ferner ein Verfahren zum Einfassen eines solchen Formkörpers aus Sprödwerkstoff mit einem Halterahmen aus Kunststoff, bei dem der Formkörper in eine Spritzgießform eingelegt und direkt mit dem Kunststoff umspritzt wird.

Flächige Formkörper, insbesondere Platten aus Sprödwerkstoffen, vorzugsweise solche mit einem geringen thermischen Ausdehnungskoeffizienten, wie Glas- oder Glaskeramikplatten, werden in mannigfaltigen Bereichen der Industrie und des Haushaltes eingesetzt. Typische Beispiele sind Isolier-Fensterscheiben, Kochflächen mit einer Glaskeramikplatte sowie Glas-Ablagen in Kühlgeräten.

Zur Erleichterung der Handhabung solcher flächiger Formkörper, insbesondere bei der Montage und zur Vermeidung eines von den Randbereichen ausgehenden Bruchrisikos werden die Formkörper in einem Halterahmen aufgenommen. Diese Halterahmen bestehen jedoch typischerweise aus Materialien, die gegenüber dem Formkörperwerkstoff einen unterschiedlichen thermischen Ausdehnungskoeffizienten aufweisen.

Nachfolgend sind typische Werte für den thermischen Ausdehnungskoeffizienten ausgeführt.

### Formkörperwerkstoff

| | |
|---|---|
| Glaskeramik, z.B. der unter der Marke CERAN® bekannte Werkstoff | α < 0.5 . 10⁻⁶ 1/K |
| Kalknatronglas | α ∼ 9 . 10⁻⁶ 1/K |
| Borosilikatglas, z.B. der unter der Marke DURAN® bekannte Werkstoff | α ∼ 3,3 . 10⁻⁶ 1/K |

### Rahmenmaterialien

| | |
|---|---|
| Aluminium | α ∼ 25 . 10⁻⁶ 1/K |
| Stahl | α ∼ 12 . 10⁻⁶ 1/K |
| Kunststoffe (allgemein) | α typisch 80.... 200 . 10⁻⁶ 1/K |
| Spezialkunststoff, z.B. der unter dem Namen NU-STONE bekannte glasfaserverstärkte Polyester der Fa. Industrial Dielectrics Inc. | α ∼ 15 . 10⁻⁶ 1/K |

Dieser Unterschied in den thermischen Ausdehnungskoeffizienten macht sich dabei gerade bei Anwendungen, bei denen der in einem Halterahmen aufgenommene Formkörper, insbesondere Platte, stark schwankenden Temperaturen ausgesetzt ist, z.B. im Fall einer Glaskeramik-Kochfläche, mechanisch stark bemerkbar und muß beim Einfassen der Platte in den Rahmen konstruktiv bzw. herstellungstechnisch besonders bedacht werden. Weiterhin ist zu beachten, daß infolge der unterschiedlichen Dehnung insbesondere bei Glaskeramik-Kochflächen eine dauerhaft dichte Verbindung zwischen Platte und Rahmen über die Nutzungsdauer gewährleistet sein muß und bei mechanischer Stoßbelastung die Kochfläche dauerelastisch gelagert sein muß.

Es ist bekannt, Platten aus Glas, Glaskeramik oder anderen Sprödwerkstoffen mittels dauerelastischem Kleber (z.B. Silikonkleber o.ä.) in Rahmen aus Kunststoff oder Metall zu fixieren. Beispiele dafür sind Fensterrahmen oder Glaskeramik-Kochflächen. Der dauerelastische Kleber gleicht dabei die unterschiedlichen thermischen Ausdehnungen unter Beibehalt der Dichtheit aus.

Weiterhin sind sogenannte Trockenmontagemethoden bekannt, bei denen die Glas- oder Glaskeramikplatte zwischen dauerelastischen Dichtlagen eingeklemmt wird. Die dauerelastischen Zwischenlagen sind zum einen erforderlich, daß bei mechanischer Beanspruchung kein direkter Kontakt zwischen dem Sprödwerkstoff und beispielsweise dem Metallrahmen auftreten kann, der zu einer Oberflächenverletzung und damit zum Bruch führen würde. Zum anderen gleicht diese Zwischenlage Planitätsunterschiede und Unterschiede in der thermischen Ausdehnung aus. Insbesondere für Glaskeramik-Kochflächen ist letzteres sehr wichtig, da die Glaskeramik nahezu keine Ausdehnung bei Temperaturen aufweist, der Rahmen, je nach Material, sich aber im allgemeinen bei Temperaturerhöhung ausdehnt. Zudem wird durch die elastische Zwischenlage eine Spannungsübertragung vom Rahmen auf den Sprödwerkstoff Glas/Glaskeramik weitgehend vermieden.

Durch das DE-U-G 90 04 180.1 ist es bekannt, Ablagen eines Haushalts-Kühlschrankes als Glasplatten auszubilden, welche von einem geschlossenen Kunststoff-Rahmen eingefaßt sind. Der Kunststoff-Rahmen ist dabei auf einfache Weise durch Umspritzen der Glasplatte gebildet. Dieses Umspritzen erfolgt mittels bekannter, einfacher Spritzgießverfahren, bei denen Kunststoffe direkt um Glasscheiben gespritzt werden. Dabei wird die Glasscheibe in eine Form gelegt, in die anschließend aufgeschmolzener Kunststoff mit hohem Druck gepreßt wird. Der plastisch fließende Kunststoff füllt dabei die Hohlräume der Form und umschließt dabei die Glasscheibe dichtend für den Fall, daß der Rahmen die Glasscheibe hinreichend übergreift. Problematisch dabei ist aber, daß der Kunststoff relativ stark schrumpft und dadurch in der Glasscheibe relativ hohe Wölbspannungen induziert werden. Unterschiede in der thermischen Ausdehnung erschweren zudem in der Praxis diese Anwendung. Andererseits kann z.B. durch eine Vorspannung im Glas erreicht werden, daß dieses mechanisch wesentlich belastbarer wird und daher beim Auftreten von Wölbspannungen nicht bricht. In der US-A-5,362,145 ist eine derartige Anwendung beschrieben, bei der vorgespanntes Kalknatronglas mit einem Polyproplyen-Kunststoff umspritzt wird.

Verstärkt werden solche Wölbspannungen vor allem auch durch das Rahmendesign, wenn beispielsweise beim Abkühlen infolge von ungleichförmigem Schrumpfen eine zusätzliche Kraftkomponente in Richtung senkrecht zur Plattenebene entsteht. Insbesondere bei dünnen Platten ist die Neigung zur Wölbung stärker ausgeprägt als bei einer relativ dicken Platte. Ungünstig wird dieses Verhalten weiterhin verstärkt, wenn die Glasplattenseiten unterschiedliche Oberflächenstrukturen aufweisen (Noppungen, Bedruckung, etc.), woraus zudem noch ein unterschiedliches Festigkeitsniveau resultiert. Kleinste Verletzungen in der Oberfläche können daher bereits zum Bruch führen.

Insbesondere bei der Kombination des Sprödwerkstoffes Glaskeramik für den Formkörper in Gestalt einer Platte mit Kunststoffen als Rahmenmaterial kann es aufgrund der geringeren mechanischen Festigkeit der Platte gegenüber thermisch vorgespanntem Glas und der sehr unterschiedlichen Wärmeausdehnungen bei stark schwankenden Temperaturen, wie z.B. im Fall einer Kochfläche, zu Problemen bei der Herstellung sowie über die Nutzungsdauer führen. Durch die EP 0 391 122 A2 ist eine Montageprofilleiste für Glaskeramikkochfelder bekannt geworden, die einen die Glaskeramikplatte rahmenartig umschließenden Flanschabschnitt aufweist. Dabei ist auch vorgesehen, den aus der Montageprofilleiste gebildeten Rahmen als einstückiges Bauelement direkt an den Rand der Glaskeramikplatte, in unmittelbarem Kontakt mit dieser, in einem Arbeitsvorgang nahtlos anzuspritzen.

Durch den unmittelbaren Kontakt der Glaskeramikplatte mit dem umspritzten Kunststoffrahmen ist aus den vorbeschriebenen Gründen das Sprödmaterial beim Spritzgießen starken mechanischen Belastungen ausgesetzt, abgesehen von den Problemen während der Nutzung.

Die Erfindung geht von dem eingangs bezeichneten Formkörper aus Sprödwerkstoff mit einem Halterahmen aus Kunststoff bzw. von dem eingangs bezeichneten Verfahren aus, das grundsätzlich auf vergleichbar einfache Weise eine Einfassung der Formkörper mit einem Rahmen ermöglicht.

Die Aufgabe der Erfindung ist es, den Formkörper mit dem einfassenden umspritzten Kunststoff-Halterahmen bzw. das Verfahren so zu gestalten, daß Sprödwerkstoffe mit insbesondere kleinen thermischen Ausdehnungskoeffizienten und vergleichsweise geringer mechanischer Festigkeit mit Kunststoffen höherer thermischer Ausdehnung bzw. mit großem Volumenschrumpf durch Aushärten mittels Spritzgießverfahren umspritzt werden können, ohne daß o.g. Bruchrisiken bzw. Probleme bei der Nutzung auftreten.

Insbesondere soll damit auch für Glaskeramik-Kochflächen ein Verfahren bereitgestellt werden, bei dem die Kochfläche mit Kunststoffen als Rahmenmaterial umspritzt wird. Ohne Beschränkung gilt dies auch für andere Sprödwerkstoffe mit vergleichsweise geringer mechanischer Festigkeit.

Die Lösung dieser Aufgabe gelingt gemäß der Erfindung für die Ausbildung des Formkörpers einmal dadurch, daß zwischen Halterahmen und dem zu umspritzenden Formkörper mindestens ein Schrumpf-aufnehmendes Element eingebettet ist.

Alternativ gelingt die Lösung der Aufgabe für die Ausbildung des Formkörpers dadurch, daß konstruktiv Schrumpf-aufnehmende Elemente in dem Halterahmen ausgeformt sind.

Ausgehend von dem eingangs bezeichneten Verfahren gelingt die Lösung der Aufgabe gemäß der Erfindung einmal dadurch, daß mindestens ein Schrumpfaufnehmendes Element vor dem Spritzgießen in die Spritzgießform separat eingelegt bzw. zusammen mit dem zu umspritzenden Formkörper, an diesem angebracht, in die Spritzgießform eingebracht wird, sowie alternativ dadurch, daß die Spritzgießform so ausgebildet ist, daß beim Gießen im Halterahmen konstruktiv Schrumpf-aufnehmende Bereiche ausformbar sind.

Ferner gelingt die Lösung der Aufgabe dadurch, daß in einem ersten Spritzgießprozeßschritt ein Schrumpf-aufnehmendes Element an den Rand des Formkörpers angeformt und anschließend in einem zweiten Spritzgießprozeßschritt der Halterahmen ausgeformt wird.

Durch den beim Aushärten des Kunststoffes des Halterahmens auftretenden Schrumpf werden die Schrumpf-aufnehmenden Elemente zusammengepreßt. Die dabei auf die Platte aus Sprödwerkstoff wirkende mechanische Spannung wird dadurch minimiert und erreicht keine Werte, die ein Bruchrisiko der Platte aus Sprödwerkstoff bedingen bzw. die Dichtheit zwischen Platte und Rahmen während ihrer Nutzungsdauer beeinträchtigen könnten.

Die eingebetteten Elemente gewährleisten zudem im praktischen Gebrauch eine dauerelastische Lagerung der Formkörper, was für die mechanische Stoßbelastbarkeit von großem Vorteil ist und sorgen zudem für eine ausreichende Dichtung zwischen Formkörper und Rahmen während der Nutzung.

Gemäß einer Ausgestaltung der Erfindung genügt im einfachsten Fall die Einbringung der Schrumpf-aufnehmenden Elemente in den Eckbereichen des Kunststoff-Halterahmens, da in diesen Eckbereichen die größte Kraftkomponente einwirkt, die insbesondere zu einer Wölbspannung in der Platte aus Sprödwerkstoff führt.

Gemäß einer Weiterbildung der Erfindung können auch rundumlaufende Schrumpf-aufnehmende Elemente nach Art eines Dichtprofiles, z.B. Rundschnüre, U- oder L-Profile oder dgl. aus entsprechenden kompressiblen Materialien Verwendung finden, ggf. zusätzlich zu Schrumpf-aufnehmenden Elementen in den Eckbereichen. Das vereinfacht den Herstellungsprozeß und sichert auch eine gleichmäßige Spannungsverteilung.

Weiterhin sind besondere Randgeometrien für die Glas- oder Glaskeramikplatten vorgesehen, die zum einen mechanische Spannungsspitzen und zum anderen Rißverletzungen an der Kantenoberfläche, die zum Bruch führen können, zusätzlich weitestgehend verhindern.

Weitere Ausgestaltungen sowie Vorteile der Erfindung ergeben sich anhand der Beschreibung von in den Zeichnungen dargestellten Ausführungsbeispielen.

Es zeigen:
- Figur 1: in Draufsicht eine Platte aus Sprödwerkstoff, eingefaßt in einen Kunststoffrahmen mit Schrumpf-aufnehmenden Elementen gemäß der Erfindung in verschiedenen Varianten,
- Figur 2: einen Schnitt durch einen Rahmenteil der Figur 1 entlang der Linie II-II mit einer zusätzlichen Ausgestaltung,
- Figur 3: einen vergrößerten Ausschnitt der Draufsicht nach Figur 1 im Eckbereich der Platte,
- Figur 4 und 5: schematisch im Schnitt und in Draufsicht ein Rahmendesign, bei dem konstruktiv Schrumpf-aufnehmende Elemente im Halterahmen ausgeformt sind,
- Figur 6: schematisch im Schnitt einen Ausschnitt des Halterahmens mit Platte, bei dem die Plattenränder von einem geschäumten U-Profil als Schrumpf-aufnehmendes Element umfaßt sind, und
- Figur 7: schematisch im Schnitt einen Ausschnitt des Halterahmens mit Platte, bei dem die Plattenränder vor dem Spritzgießprozeß mit einem rundumlaufenden L-förmigen dauerelastischen Profil umfaßt wurden.

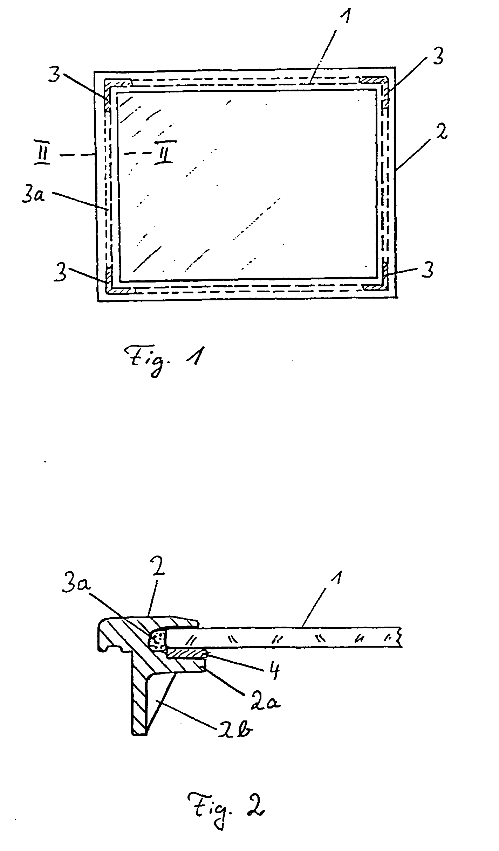

Die Figur 1 zeigt schematisch in Draufsicht einen plattenförmigen Formkörper 1 aus Sprödwerkstoff mit geringem thermischen Ausdehnungskoeffizienten, der in einem Kunststoffrahmen 2 vorzugsweise durch direktes Umspritzen des Kunststoffes eingefaßt ist.

Der plattenförmige Formkörper nach Figur 1 ist ein bevorzugtes Ausführungsbeispiel für einen flächigen Formkörper. Es können auch Formkörper aus Sprödwerkstoff mit anderer Gestalt Anwendung finden. Der plattenförmige Formkörper nach Fig. 1 muß auch nicht durchgehend eben ausgebildet sein. Er kann z.B. auch gebogen oder abgekantet ausgebildet sein.

Das Sprödmaterial kann insbesondere aus Glas, Glaskeramik oder Keramik bestehen. Bei einer Ausführung in Glas besteht das Sprödmaterial aus nicht vorgespanntem Glas, das wesentlich kostengünstiger als vorgespanntes Glas ist. Das verwendete Glas weist dabei vorzugsweise einen thermischen Ausdehnungskoeffizient kleiner oder gleich 4,5 . 10⁻⁶ 1/K auf. Im Fall von Glaskeramik als Sprödwerkstoff weist dieses vorzugsweise einen Ausdehnungskoeffizient von kleiner oder gleich 1,5 . 10⁻⁶ 1/K auf. Für alle diese Ausführungsformen gelten die nachstehenden Darlegungen entsprechend.

Um Spannungsspitzen in der Glaskeramikplatte 1 zu vermeiden, die zwangsläufig infolge der Wärmeausdehnungsunterschiede und dem materialabhängigen Schrumpfverhalten resultieren, sind gemäß der Erfindung Schrumpf-aufnehmende Elemente 3 in den Eckbereichen der Platte 1 eingebettet. Durch den Schrumpf des Kunststoffrahmens nach dem Aushärten des Kunststoffes werden diese Elemente zusammengepreßt. Die mechanische Spannung auf die Glaskeramikplatte wird dabei minimiert.

Im einfachsten Fall genügt, wie dargestellt, die Einbringung der Elemente 3 in den Eckbereich, da hier die größte Kraftkomponente einwirkt, die insbesondere zu einer Wölbspannung der Glaskeramikplatte führt.

Weiterhin vorteilhaft ist die Einbringung eines rundumlaufenden Elementes 3a, z.B eine Art Dichtschnur. Derartige Elemente bestehen im einfachsten Fall aus Dichtprofilen, die sich komprimieren lassen. Beispiele dafür sind Rundschnüre aus Zellkautschuk oder auch keramische Vliesmaterialien oder Rundschnüre, die ihrerseits kompressibel sind. Bevorzugt werden temperaturbeständige Materialien verwendet, die der typischen Prozeßtemperatur beim Spritzgießen von 200 - 350°C zumindest kurzzeitig standhalten können und sich komprimieren lassen (z.B. Silikon-Zellkautschuk oder weicher Silikon). Derartige Materialien finden auch im Fall der Eckelemente 3 Anwendung.

Das Verfahren zum Einfassen der Platte 1 mit dem Halterahmen 2 aus Kunststoff ist mit Vorteil sehr einfach. Nachdem die zu umspritzende Glaskeramikplatte 1 in eine der auszubildenden Rahmenform entsprechenden Spritzgießform eingelegt wurde, wird in eine Nut eine entsprechende Schnur 3a um die Platte oder in die Form gelegt bzw. werden die Eckelemente 3 eingebracht. Nach Schließen der Form wird der aufgeschmolzene Kunststoff in die Form gepreßt und umschließt die Platte incl. der Schnur 3a bzw. die Elemente 3. Nach einer gewissen Haltezeit wird die Form geöffnet. Der Kunststoff kühlt dabei während der Haltezeit bereits relativ stark ab. Dabei schrumpft der Kunststoff unter Bildung des Halterahmens 2 auf die Glaskeramikplatte 1 auf, wobei die Schrumpfelemente 3, 3a zusammengedrückt werden. Alternativ dazu kann es von Vorteil sein, wenn die Platte 2 bereits vor dem Spritzgießprozeß mit einer entsprechenden Schnur 3a bzw. den Elementen 3 versehen und so in die Form eingebracht wird. Vorteilhaft sind dabei selbstklebende Silikonprofile. Diese bieten gleichzeitig für die Handhabung eine gewisse Schutzwirkung vor Beschädigung des Formkörpers beim Einlegen in das Spritzgießwerkzeug.

Das Spritzgießen als solches ist ein nach dem Stand der Technik bekanntes Verfahren und braucht daher hier im einzelnen nicht erläutert zu werden.

Figur 2 zeigt die Anordnung aus Figur 1 im Schnitt entlang der Linie II-II. Die Glaskeramikplatte 1 liegt dabei zusätzlich auf einer dauerelastischen Dichtauflage 4, z.B. aus Silikonprofil, die wiederum von einem Auflageschenkel 2a des Halterahmens 2, ggf. zusätzlich gestützt durch Querstreben 2b, gehalten wird.

Figur 3 zeigt einen vergrößerten Ausschnitt der Figur 1. In diesem Beispiel wurde vor dem Spritzgießprozeß eine rundumlaufende Dichtschnur 3a um die Glaskeramikplatte 1 gelegt. Zusätzlich weist die Glaskeramikplatte im Eckbereich eine Anordnung 1a auf, die dort entstehenden Spannungen verteilen soll. Ebenso denkbar ist eine entsprechende Abschrägung der Ecken.

Ein weiteres Ausführungsbeispiel für ein rundumlaufendes Schrumpf-aufnehmendes Element ist in Figur 6 dargestellt. Hierbei wird die zu umspritzende Glaskeramikscheibe 1 im Randbereich mit einem U-Profil 3b, das auch selbstklebend ausgebildet sein kann, umgeben und anschließend in die Spritzgußform eingelegt.

Ein weiteres Ausführungsbeispiel ist in Figur 7 dargestellt. Hierbei wird zuvor die Glaskeramikplatte 1 im Randbereich mit einem selbstklebenden L-Profil 3c umgeben und anschließend in die Spritzgießform eingelegt.

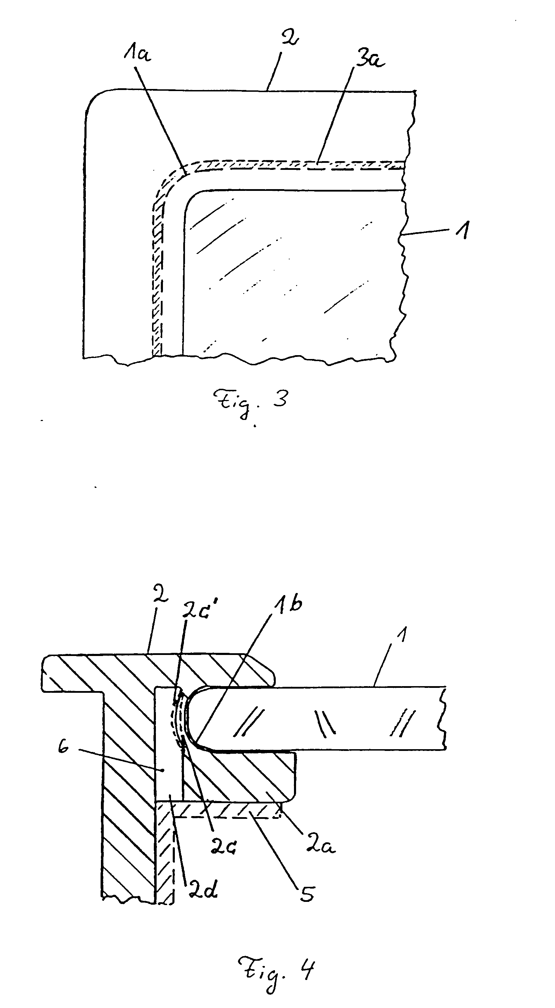

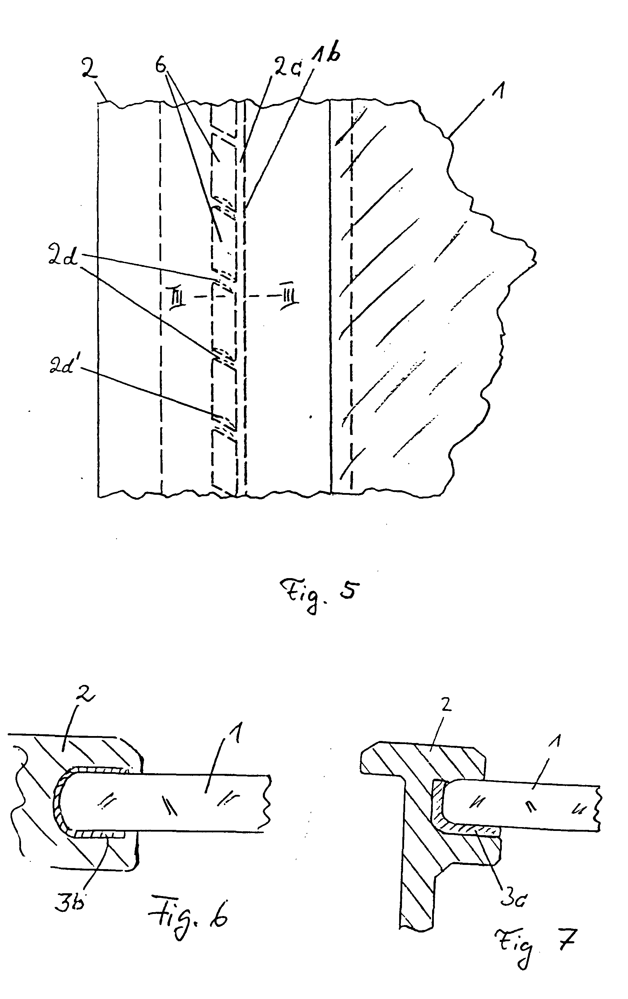

Die Figuren 4 und 5 zeigen schematisch im Schnitt und in Draufsicht als weiteres Ausführungsbeispiel ein Rahmendesign, bei dem konstruktiv Schrumpf-aufnehmende Elemente in den Halterahmen 2 eingebaut wurden. Dabei ist das Rahmenprofil durch eine entsprechende Gießform derart ausgeprägt, daß Hohlräume 6 zwischen dem massiven, tragenden Teil des Rahmens 2 und der Glaskeramikplatte 1 vorgesehen werden, die den Schrumpf aufnehmen. Die Glaskeramikplatte 1 wird dabei im Stirnbereich lediglich durch dünne, leicht nachgebende Stege 2c gehalten, die wiederum über vorzugsweise schräg gestellte dünne Querstege 2d gehalten werden. Auftretende Schrumpfspannungen werden bei dieser Konstruktion über eine definierte Verformung der Stege 2c bzw. 2d abgebaut. Um die Stabilität der Rahmenkonstruktion zusätzlich zu verbessern, kann ggf. ein vormontierter Verstärkungswinkel 5, bestehend aus Metall oder Kunststoff, zusätzlich angebracht werden.

Eine weitere, bei allen Ausführungsformen mögliche unterstützende Maßnahme zur Vermeidung des Bruchrisikos ist eine spezielle Randbearbeitung der Glas- oder Glaskeramikplatte, bei der Kantenbeschädigungen, wie Mikrorisse bzw. Ausmuschelungen, vermieden werden. Geeignet sind spezielle Schleif- und Polierverfahren. Insbesondere der bei Kochflächen bereits bekannte C-Facettenschliff gemäß Figur 5, Position 1b zeichnet sich durch eine entsprechende glatte, nahezu polierte Oberfläche aus.

Das Kunststoffmaterial für den Halterahmen bestimmt sich nach dem Verwendungszweck der umspritzten Platte. Für Rahmen von Glaskeramikplatten für Kochflächen werden temperaturstabile, ggf. zum Teil faserverstärkte, z.B. durch Glasfasern, verwindungsarme Spezialkunststoffe benötigt, die andererseits aufgrund ihrer Zähigkeit allerdings besonders stark mechanische Spannung auf die Glaskeramikplatte übertragen.

Als weitere Eigenschaften derartiger Kunststoffe für die Anwendung als Kochflächenrahmen sind zu nennen:
- chemisch beständig und fleckunempfindlich gegenüber diversen haushaltsüblichen Reinigern und Lebensmitteln
- kratzunempfindlich
- farbbeständig
- lebensmittelverträglich.

Die Kunststoffe, mit denen man bisher vorgespannte Glasscheiben umspritzt hat, z.B. Polypropylen, zeichnen sich eher durch ein größeres Fließverhalten aus, so daß zwar am Anfang kurzfristig höhere Schrumpfspannungen auftreten, diese aber relativ schnell abgebaut werden können. Zudem ist bei diesen Kunststoffen auch noch die Prozeßtemperatur aufgrund des niedrigen Schmelzpunktes geringer als bei den für Kochflächenrahmen benötigten Kunststoffen. Diese Kunststoffe eignen sich daher vorzugsweise für Anwendungen mit weniger strengen Anforderungen als im Fall von Kochflächenrahmen.

Die Rahmen können, je nach Anwendungszweck, verschiedene Profile aufweisen (z.B. U-Profil, L-Profil). Sie sind bereits vorzugsweise mit entsprechenden Öffnungen, Ausbuchtungen und Haltevorrichtungen zur Montage von weiteren Kochfeldelementen, beispielsweise Heizelemente oder weitere Rahmenteile, versehen, die für eine Weitermontage sehr hilfreich sind (z.B. Schnappverbindungen, Rastöffnungen etc.).

Die im Rahmen der Erfindung verwendbaren Sprödwerkstoffe sind
- nicht vorgespannte Spezialgläser mit einem α ≤ 4,5 ·10⁻⁶ 1/K
- Glaskeramiken mit einem α ≤ 1,5 · 10⁻⁶ 1/K.

Als Beispiele seien genannt:

Das unter der Marke CERAN® bekannte Material, der weiße Glaskeramik-Werkstoff NEOCERAM® der Fa. NEG und Borosilikatgias (BOROFLOAT® der Firma SCHOTT).

Neben den bereits genannten Anwendungen eignen sich die erfindungsgemäßen Platten für Grillgeräte, Indulationskochgeräte sowie als Mikrowellentür und als Abdeckplatten für Gefrierkühltruhen, Kühl- oder Gefrierschranktüren sowie für Herdabdeckungen.

## Patentansprüche

1. Formkörper (1) aus Sprödwerkstoff, der in einem umspritzten Halterahmen (2) aus Kunststoff eingefaßt ist, wobei zwischen Halterahmen (2) und dem zu umspritzenden Formkörper (1) mindestens ein Schrumpf-aufnehmendes Element (3, 3a, 3b, 3c) eingebettet ist, dadurch gekennzeichnet, daß der Formkörper als thermisch belastetes Teil eines Thermo-Küchengerätes ausgebildet ist und die Sprödwerkstoffe nicht vorgespannte Gläser mit einem thermischen Ausdehnungskoeffizienten α ≤ 4,5·10⁻⁶ 1/K oder Glaskeramiken mit einem thermischen Ausdehnungskoeffizienten α ≤ 1,5·10⁻⁶ 1/K sind.

2. Formkörper nach Anspruch 1, dadurch gekennzeichnet, daß der Formkörper (1) als Glaskeramikplatte für eine Kochfläche ausgebildet ist und der Halterahmen (2) aus einem temperaturstabilen, faserverstärkten und verwindungsarmen Kunstoff besteht.

3. Formkörper nach Anspruch 1 oder 2, dadurch gekennzeichnet, daß in allen Eckbereichen des Halterahmens (2) zwischen diesem und dem Formkörper (1) Schrumpf-aufnehmende Elemente (3) eingebettet sind.

4. Formkörper nach Anspruch 1 oder 2, dadurch gekennzeichnet, daß mindestens ein rund um den Umfang des Formkörpers (1) umlaufendes Schrumpf-aufnehmendes Element (3a, 3b, 3c) zwischen dem Halterahmen (2) und dem Formkörper (1) eingebettet ist.

5. Formkörper nach einem der Ansprüche 1-4, dadurch gekennzeichnet, daß das Schrumpf-aufnehmende Element (3, 3a, 3b, 3c) ein Dichtprofil aus komprimierbarem Material ist.

6. Formkörper nach einem der Ansprüche 1-5, dadurch gekennzeichnet, daß das Schrumpf-aufnehmende Element (3, 3a, 3b, 3c) aus einem temperaturbeständigen Material, insbesondere aus Silikon-Kautschuk oder aus Silikon-Zellkautschuk oder aus Zellkautschuk oder aus einem keramischen Vliesmaterial besteht.

7. Formkörper nach einem der Ansprüche 4 bis 6, dadurch gekennzeichnet, daß das rundumlaufende Schrumpf-aufnehmende Element ein U-Profil (3b) oder ein L-Profil (3c) ist, das die Formkörperränder unmittelbar umfaßt.

8. Formkörper nach Anspruch 5 oder 6, 7, dadurch gekennzeichnet, daß die Dichtprofile (3b, 3c) auf die Ränder des Formkörpers aufgeklebt sind.

9. Verfahren zum Einfassen des Formkörpers (1) aus Sprödwerkstoff nach einem der Ansprüche 1 bis 8 mit einem Halterahmen (2) aus Kunststoff, bei dem der Formkörper in eine Spritzgießform eingelegt und direkt mit dem Kunststoff umspritzt wird, und mindestens ein Schrumpf-aufnehmendes Element (3, 3a, 3b, 3c) vor dem Spritzgießen in die Spritzgießform separat eingelegt oder zusammen mit dem zu umspritzenden Formkörper (1), an diesem angebracht, in die Spritzgießform eingebracht wird, dadurch gekennzeichnet, daß der Sprödwerkstoff ein nicht vorgespanntes Glas mit einem thermischen Ausdehnungskoeffizienten α ≤ 4,5·10⁻⁶ 1/K oder eine Glaskeramik mit einem thermischen Ausdehnungskoeffizienten α ≤ 1,5·10⁻⁶ 1/K ist.

10. Verfahren nach Anspruch 9, dadurch gekennzeichnet, daß in allen Eckbereichen des Formkörpers (1) Schrumpf-aufnehmende Elemente (3) in die Spritzgießform eingelegt oder eingebracht werden.

11. Verfahren nach Anspruch 9, gekennzeichnet durch die Einlegung oder Einbringung eines rund um den Umfang des Formkörpers (1) umlaufenden Schrumpf-aufnehmenden Elementes (3a, 3b, 3c).

12. Verfahren nach Anspruch 11, dadurch gekennzeichnet, daß der zu umspritzende Formkörper zunächst mit einem U-Profil (3b) oder einem L-Profil (3c) umgeben und anschließend in die Spritzgießform eingelegt wird.

13. Formkörper (1) aus Sprödwerkstoff, der in einem umspritzten Halterahmen (2) aus Kunststoff eingefaßt ist, dadurch gekennzeichnet, daß konstruktiv Schrumpf-aufnehmende Elemente (6, 2c, 2d) in dem Halterahmen (2) ausgeformt sind.

14. Formkörper nach Anspruch 13, dadurch gekennzeichnet, daß die konstruktiven Schrumpf-aufnehmenden Elemente durch Hohlräume (6) im Halterahmen (2) in Verbindung mit dünnen, leicht nachgebenden Stegen (2c, 2d) gebildet sind.

15. Verfahren zum Einfassen des Formkörpers (1) aus Sprödwerkstoff nach Anspruch 13 oder 14 mit einem Halterahmen (2) aus Kunststoff, bei dem der Formkörper (1) in eine Spritzgießform eingelegt und direkt mit dem Kunststoff umspritzt wird, dadurch gekennzeichnet, daß die Spritzgießform zusätzlich Formelemente aufweist, derart, daß beim Gießen im Halterahmen (2) konstruktiv Schrumpf-aufnehmende Bereiche (6, 2c, 2d), insbesondere Hohlräume in Verbindung mit dünnen leicht nachgebenden Stegen, ausgeformt werden.

## Claims

1. Shaped article (1) made of brittle material, which is encapsulated in an injection-moulded holding frame (2) made of plastics material, at least one shrinkage-absorbing element (3, 3a, 3b, 3c) being embedded between the holding frame (2) and the shaped article (1) which is to be encapsulated by injection moulding, characterized in that the shaped article is designed as a thermally loaded part of a heating kitchen appliance, and the brittle materials are untempered glass materials having a coefficient of thermal expansion α ≤ 4.5·10⁻⁶ 1/K or glass ceramics with a coefficient of thermal expansion α ≤ 1.5·10⁻⁶ 1/K.

2. Shaped article according to Claim 1, characterized in that the shaped article (1) is designed as a glass ceramic plate for a cooking surface, and the holding frame (2) consists of a heat-stable, fibre-reinforced, low-distortion plastics material.

3. Shaped article according to Claim 1 or 2, characterized in that the shrinkage-absorbing elements (3) are embedded in all the corner regions of the holding frame (2), between the latter and the shaped article (1).

4. Shaped article according to Claim 1 or 2, characterized in that at least one shrinkage-absorbing element (3a, 3b, 3c) which runs round the periphery of the shaped article (1) is embedded between the holding frame (2) and the shaped article (1).

5. Shaped article according to one of Claims 1-4, characterized in that the shrinkage-absorbing element (3, 3a, 3b, 3c) is a sealing profile made of compressible material.

6. Shaped article according to one of Claims 1-5, characterized in that the shrinkage-absorbing element (3, 3a, 3b, 3c) consists of a temperature-resistant material, in particular of silicone rubber or of foamed silicone rubber or of foamed rubber or of a ceramic matt material.

7. Shaped article according to one of Claims 4 to 6, characterized in that the encircling shrinkage-absorbing element is a U-profile (3b) or a L-profile (3c) which directly surrounds the edges of the shaped article.

8. Shaped article according to Claim 5 or 6, 7, characterized in that the sealing profiles (3b, 3c) are adhesively bonded onto the edges of the shaped article.

9. Method for encapsulating the shaped article (1) made of brittle material according to one of Claims 1 to 8 with a holding frame (2) made of plastics material, in which the shaped article is inserted into an injection mould and is directly encapsulated with the plastics material by injection moulding and at least one shrinkage-absorbing element (3, 3a, 3b, 3c) is inserted separately into the injection mould or is introduced into the injection mould together with the shaped article (1) to be encapsulated by injection moulding, arranged on the said shaped article, prior to injection moulding, characterized in that the brittle material is an untempered glass material with a coefficient of thermal expansion α ≤ 4.5·10⁻⁶ 1/K or a glass ceramic with a coefficient of thermal expansion α ≤ 1.5·10⁻⁶ 1/K.

10. Method according to Claim 9, characterized in that shrinkage-absorbing elements (3) are inserted or introduced into the injection mould in all the corner regions of the shaped article (1).

11. Method according to Claim 9, characterized by the insertion or introduction of a shrinkage-absorbing element (3a, 3b, 3c) which runs around the periphery of the shaped article (1).

12. Method according to Claim 11, characterized in that the shaped article which is to be encapsulated by injection moulding is firstly surrounded by a U-profile (3b) or an L-profile (3c) and is then inserted into the injection mould.

13. Shaped article (1) made of brittle material which is encapsulated in an injection-moulded holding frame (2) made of a plastics material, characterized in that elements (6, 2c, 2d) which structurally absorb shrinkage are moulded out in the holding frame (2).

14. Shaped article according to Claim 13, characterized in that the structural shrinkage-absorbing elements are formed by cavities (6) in the holding frame (2) in conjunction with thin, easily resilient webs (2c, 2d).

15. Method for encapsulating the shaped article (1) made of brittle material according to Claim 13 or 14 with a holding frame (2) made of plastics material, in which the shaped article is inserted into an injection mould and is directly encapsulated with the plastics material by injection moulding, characterized in that the injection mould additionally has mould elements, in such a manner that regions (6, 2c, 2d) which structurally absorb shrinkage, in particular cavities in conjunction with thin, easily resilient webs, are moulded out in the holding frame (2) during moulding.

## Revendications

1. Corps façonné (1) en matière fragile, qui est enserré dans un cadre support en matière synthétique moulé par injection (2), au moins un élément absorbant un retrait (3, 3a, 3b, 3c) étant encastré, entre le cadre support (2) et le corps façonné (1) à mouler par injection, caractérisé en ce que le corps façonné se présente sous la forme d'une partie, sollicitée par la chaleur, d'un appareil thermique de cuisine et les matériaux fragiles sont des verres non pré-contraints ayant un coefficient de dilatation thermique α ≤ 4,5·10⁻⁶ 1/K ou des vitrocéramiques ayant un coefficient dedilatation thermique α ≤ 1,5·10⁻⁶ 1/K.

2. Corps façonné selon la revendication 1, caractérisé en ce que le corps façonné (1) se présente sous la forme d'une plaque vitrocéramique pour un plan de cuisson et le cadre support (2) est constitué d'une matière synthétique stable à la température, renforcée par des fibres et à faible gauchissement.

3. Corps façonné selon la revendication 1 ou 2, caractérisé en ce que des éléments absorbant un retrait (3) sont encastrés dans toutes les zones d'angle du cadre support (2) entre ce cadre et le corps façonné (1).

4. Corps façonné selon la revendication 1 ou 2, caractérisé en ce qu'au moins un élément absorbant un retrait (3a, 3b, 3c) entourant la périphérie du corps façonné (1) est encastré entre le cadre support (2) et le corps façonné (1).

5. Corps façonné selon l'une quelconque des revendications 1-4, caractérisé en ce que l'élément absorbant un retrait (3, 3a, 3b, 3c) est un profilé étanche constitué d'un matériau compressible.

6. Corps façonné selon l'une quelconque des revendications 1-5, caractérisé en ce que l'élément absorbant un retrait (3, 3a, 3b, 3c) est constitué d'un matériau résistant à la température, en particulier d'un caoutchouc de silicone ou d'un caoutchouc cellulaire de silicone ou encore d'un caoutchouc cellulaire ou d'un matériau de voile céramique.

7. Corps façonné selon l'une quelconque des revendications 4 à 6, caractérisé en ce que l'élément absorbant un retrait périphérique entoure un profilé en U (3b) ou un profilé en L (3c), qui entoure directement les bords du corps façonné.

8. Corps façonné selon la revendication 5 ou 6, 7, caractérisé en ce que les profilés étanches (3b, 3c) sont collés sur les bords du corps façonné.

9. Procédé pour enserrer le corps façonné (1) constitué d'un matériau fragile selon l'une quelconque des revendications 1 à 8 comprenant un cadre support (2) en matière synthétique, dans lequel le corps façonné est mis dans un moule de coulage par injection et directement moulé avec la matière synthétique, et au moins un élément absorbant un retrait (3, 3a, 3b, 3c) est mis avant le coulage par injection dans le moule de coulage par injection séparément ou conjointement avec le corps façonné (1) à mouler par injection, posé sur celui-ci, caractérisé en ce que le matériau fragile est un verre non pré-contraint ayant un coefficient de dilatation thermique α ≤ 4,5·10⁻⁶ 1/K ou une vitrocéramique ayant un coefficient de dilatation thermique α ≤ 1,5·10⁻⁶ 1/K.

10. Procédé selon la revendication 9, caractérisé en ce que, dans toutes les zones d'angle du corps façonné (1), des éléments absorbant un retrait (3) sont mis ou déposés dans le moule de coulage par injection.

11. Procédé selon la revendication 9, caractérisé par la mise en place ou la pose d'un élément absorbant un retrait (3a, 3b, 3c) entourant la périphérie du corps façonné (1).

12. Procédé selon la revendication 11, caractérisé en ce que le corps façonné à mouler par injection est tout d'abord entouré d'un profilé en U (3b) ou d'un profilé en L (3c) et ensuite mis dans le moule de coulage par injection.

13. Corps façonné (1) constitué d'un matériau fragile, qui est enserré dans un cadre support en matière synthétique moulé par injection (2), caractérisé en ce que des éléments absorbant un retrait (6, 2c, 2d) sont structurellement formés dans le cadre support (2) .

14. Corps façonné selon la revendication 13, caractérisé en ce que les éléments absorbant un retrait structurels sont formés par des espaces creux (6) dans le cadre support (2) en liaison avec de minces arêtes (2c, 2d) aisément flexibles.

15. Procédé pour enserrer le corps façonné (1) en matériau fragile selon la revendication 13 ou 14 avec un cadre support (2) en matière synthétique, dans lequel le corps façonné (1) est mis dans un moule de coulage par injection et directement moulé avec la matière synthétique, caractérisé en ce que le moule de coulage par injection présente en outre des éléments de moulage de telle sorte que soient moulées, lors du coulage dans le cadre support (2), des zones rétractables structurelles (6, 2c, 2d), en particulier des espaces creux en liaison avec des arêtes minces aisément flexibles.
